**Europäisches Patentamt**

**European Patent Office**

**Office européen des brevets**

(11) Veröffentlichungsnummer: **0 356 680**
**A1**

# (12) EUROPÄISCHE PATENTANMELDUNG

(21) Anmeldenummer: 89113077.5

(22) Anmeldetag: 17.07.89

(51) Int. Cl.5: **G01N 21/90 , G01B 11/24**

(30) Priorität: 11.08.88 DE 3827302

(43) Veröffentlichungstag der Anmeldung:
07.03.90 Patentblatt 90/10

(84) Benannte Vertragsstaaten:
**AT BE CH DE FR GB IT LI LU NL SE**

(71) Anmelder: **Siemens Aktiengesellschaft**
**Wittelsbacherplatz 2**
**D-8000 München 2(DE)**

(72) Erfinder: **Gerhard, Detlef**
**Hiltenspergerstrasse 54**
**D-8000 München 40(DE)**
Erfinder: **Poleschinski, Richard**
**Werdenfelsstrasse 29**
**D-8000 München 70(DE)**

(54) Optische Aufnahmeeinrichtung für Bildverarbeitungssysteme.

(57) Eine optische Aufnahmeeinrichtung für Bildverarbeitungssysteme (BVS) umfaßt ein Objektiv (11) zur Erzeugung eines optischen Bildes eines aufzunehmenden Objektes (12), einen Bild-Signal-Wandler (10), insbesondere eine CCD-Kamera, der das optische Bild in ein Videosignal (VS) umformt sowie eine Beleuchtungseinrichtung zur Beleuchtung des aufzunehmenden Objektes (12) im Auflicht. Die robuste und leistungsstarke Beleuchtungseinrichtung, die eine optimale Lichtverteilung in der Aufnahmeebene gewährleisten soll, besteht aus mehreren IR-Dioden (131,132), die in gleichmäßiger Teilung auf mindestens einem zur optischen Achse (A) des Objektivs (11) koaxialen Kreis angeordnet sind sowie mindestens einer ebenfalls koaxial zur optischen Achse (A) angeordneten ringförmigen Ablenkeinrichtung (141,142) die das von den IR-Dioden (131,132) emittierte Licht (L) allseitig schräg auf das Objekt (12) konzentriert.

FIG 1

## Optische Aufnahmeeinrichtung für Bildverarbeitungssysteme

Die Erfindung betrifft eine optische Aufnahmeeinrichtung für Bildverarbeitungssysteme mit
- einem Objektiv zur Erzeugung eines optischen Bildes eines aufzunehmenden Objektes,
- einem Bild-Signal-Wandler, welcher das vom Objektiv erzeugte optische Bild in eine zeitliche Aufeinanderfolge elektrischer Signale umformt, und mit
- einer Beleuchtungseinrichtung zur Beleuchtung des aufzunehmenden Objektes im Auflicht.

Bildverarbeitungssysteme die häufig auch nur kurz BVS genannt werden, haben die Aufgabe, eine bestimmte Szene oder ein Objekt aufzunehmen und die Bildinhalte einer nachgeordneten Recheneinheit zur weiteren Auswertung zur Verfügung zu stellen. Ein Bildverarbeitungssystem sollte daher zunächst wesentliche, d.h. für die jeweilige Aufgabe relevante Informationen aus dem vorhandenen Bild extrahieren. Dabei ist es zur Erhöhung der Verarbeitungsgeschwindigkeit bei gleichzeitiger Verkleinerung des Aufwands vorteilhaft, die Datenmenge an frühestmöglicher Stelle im Datenfluß optimal in Bezug auf die gesuchte Information zu reduzieren (vgl. Z "industrie-elektrik + electronic", 29. Jahrgang, 1984, Nr. 9, Seiten 60 bis 62). Um diese Datenreduktion schon im Vorfeld, d.h. bei Aufnahme des Bildes zu erzielen, ist es aus Z "Elektronik" 4/19.2.1988, Seiten 121 bis 126 bekannt, aktive Infrarot-Lichtquellen zu verwenden, die auf den zu vermessenden Objekten angeordnet sind. Um einen ausreichend hohen Störabstand zwischen der Hintergrundstrahlung und der IR-Quelle zu erreichen, werden im infraroten Wellenlängenbereich emittierende Dioden eingesetzt, deren Stromquellen gepulst werden.

Bildverarbeitungssysteme werden immer häufiger zur Erkennung und Vermessung von Teilen eingesetzt, wobei hier der optimalen Anpassung der Objektbeleuchtung auf die jeweilige Aufgabenstellung eine hohe Bedeutung zukommt. Dabei bereiten insbesondere Reflexionen, eine durch unterschiedliche Beleuchtungsstärken über die Fläche verursachte ungenügende Objektbeleuchtung sowie Robustheit und Gewicht der Beleuchtungseinrichtung Schwierigkeiten.

Bei bekannten optischen Aufnahmeeinrichtungen für Bildverarbeitungssysteme werden zur Beleuchtung der Objekte normale Glühlampen bzw. Halogenlampen und Leuchtstoffröhren eingesetzt. Das Licht dieser Lichtquellen scheint dabei direkt auf das jeweilige Objekt oder es wird per Spiegel oder Strahlteiler auf das Objekt gerichtet. Eine indirekte Beleuchtung des Objekts durch diffuses Licht ist ebenfalls bekannt. Nachteile dieser bekannten Beleuchtungseinrichtungen sind insbesondere ihre große Empfindlichkeit und beim Betrieb mit Wechselstrom die erforderliche Synchronisation mit dem Videosignal des Bild-Signal-Wandlers bzw. der Kamera. Sofern bei den bekannten optischen Aufnahmeeinrichtungen einen Helligkeitsregelung der Beleuchtungseinrichtung überhaupt vorhanden ist, erfolgt diese Regelung über die Blendensteuerung.

Der Erfindung liegt die Aufgabe zugrunde, bei einer gattungsgemäßen optischen Aufnahmeeinrichtung eine robuste und leistungsstarke Beleuchtungseinrichtung bereitzustellen, bei welcher die Lichtverteilung in der Aufnahmeebene optimal an die jeweilige Aufgabe des Bildverarbeitungssystems angepaßt werden kann.

Die Lösung dieser Aufgabe erfolgt erfindungsgemäß durch
- einen als Halbleiterkamera ausgebildeten Bild-Signal-Wandler,
- eine Beleuchtungseinrichtung mit mehreren im nahen Infrarotbereich emittierenden Dioden die in gleichmäßiger Teilung auf mindestens einem zur optischen Achse des Objektivs koaxialen Kreis angeordnet sind und durch
- eine koaxial zur optischen Achse des Objektivs angeordnete ringförmige Ablenkeinrichtung, die das von den Dioden emittierte Licht allseitig schräg auf das aufzunehmende Objekt konzentriert.

Bei der erfindungsgemäßen optischen Aufnahmeeinrichtung werden also im nahen Infrarotbereich, d.h. in einem Wellenlängenbereich zwischen 750 nm und 1000 nm emittierende Dioden eingesetzt. Derartige Dioden sind besonders wirkungsvoll, da ihr Wellenlängenbereich im empfindlichsten Spektralbereich der als Halbleiterkamera ausgebildeten Bild-Signal-Wandler, insbesondere der CCD-Kameras liegt. Weitere Vorteile dieser Dioden sind ihre sehr hohe Lebensdauer und die Abhängigkeit der Abstrahlintensität vom Stromdurchfluß. Durch die letztgenannte Eigenschaft kann im Bedarfsfalle die Intensität der Beleuchtung auf einfache Weise über den Strom geregelt werden. Durch die in Umfangsrichtung gleichmäßig verteilte Anordnung der Dioden auf mindestens einem zur optischen Achse des Objektivs koaxialen Kreis wird eine zumindest weitgehend homogene Ausleuchtung der Objektflächen gewährleistet, die durch eine geschickte Überlappung der Strahlungscharakteristik der einzelnen Dioden weiter gesteigert werden kann. Bei Verwendung einer größeren Anzahl von Dioden auf zwei oder mehreren konzentrischen Kreisen können eine besonders hohe Intensität sowie die Ausleuchtung einer sehr großen Fläche realisiert werden. Die koaxial zur optischen Achse des Objektivs angeordnete Ablenkeinrichtung, die ebenfalls aus einem Ring oder aus mehreren Ringen bestehen kann, ermöglicht eine optimale Anpassung der Lichtverteilung in der Aufnahmeebene an die jeweilige Aufgabe. Diese Optimierung umfaßt dann insbesondere eine flexible Anpassung der Strahleinfallswinkel an die Gegebenheiten des jeweiligen Objekts sowie eine homogene Ausleuchtung der Objektflächen. Als weitere Vorteile der erfindungsgemäßen optischen Aufnahmeeinrichtung sind die besonders geringe Empfindlichkeit der Beleuchtungseinrichtung und der einfache Betrieb ohne das Erfordernis einer Synchronisation mit dem Videosignal des Bild-Signal-Wandlers zu nennen.

Gemäß einer bevorzugten Ausgestaltung der Erfindung ist die Abstrahlintensität der Dioden über den Stromdurchfluß regelbar, wobei in besonders einfacher Weise die vom Bild-Signal-Wandler erzeugten elektrischen Signale für die Regelung der Abstrahlintensität der Dioden herangezogen werden können. Mit einer derartigen einfachen Beleuchtungsregelung können dann Störgrößen wie eine durch Alterung oder Temperatureinfluß verursachte Änderung des Leuchtverhaltens der Dioden, Umgebungslichtschwankungen, unterschiedliches Reflexionsverhalten der Objekte oder durch schwankende Abstände zwischen Objektoberfläche und Objektiv verursachte Änderungen des Kontrastes und der Bildhelligkeit berücksichtigt werden.

Eine wesentlich anspruchsvollere Beleuchtungsregelung mit der beispielsweise auch der Einfluß von Verkippungen der Objekte kompensiert werden kann, kann dadurch realisiert werden, daß die Abstrahlintensität der Dioden getrennt für mehrere Gruppen von Dioden regelbar ist. Dies ist insbesondere dann von Vorteil, wenn die Dioden quadrantenweise zu getrennt regelbaren Gruppen zusammengefaßt sind. Durch eine derartige separate Regelung der vier miteinander verkoppelten Quadranten der Bildfläche kann dann selbst starken, durch Verkippungen hervorgerufenen Lichtschwankungen entgegengewirkt werden. Eine besonders einfache und wirkungsvolle Rückführung der Beleuchtungsstärke kann in diesem Fall dann dadurch erzielt werden, daß das von einer Gruppe von Dioden ausgestrahlte und an der Oberfläche des aufzunehmenden Objektes reflektierte Licht mit zugeordneten Helligkeitssensoren erfaßt und als Regelgröße für die Regelung der Abstrahlintensität der jeweiligen Gruppe von Dioden herangezogen wird.

Zur weiteren Vereinfachung des baulichen Aufwands sind die Dioden vorzugsweise auf einem als Ringscheibe ausgebildeten Diodenträger befestigt. Gegebenenfalls können dann auch mehrere derartige Diodenträger in konzentrischer Anordnung eingesetzt werden.

Gemäß einer ersten bevorzugten Ausführungsform der Erfindung wird die Ablenkeinrichtung durch eine Ringlinse gebildet. Derartige Ringlinsen ermöglichen in besonders einfacher Weise eine flexible Anpassung der Strahleinfallswinkel an die jeweils zu lösende Aufgabe.

Die vorstehend aufgeführten Vorteile können aber auch dann erzielt werden, wenn die Ablenkeinrichtung gemäß einer zweiten bevorzugten Ausführungsform der Erfindung durch einen Ringspiegel gebildet wird. In diesem Fall ist der Ringspiegel dann vorzugsweise durch einen konischen Gehäuseabschnitt eines äußeren Gehäuses gebildet, wodurch sich bei geringem baulichen Aufwand eine besonders kompakte Bauweise realisieren läßt. Trägt dann die Außenfläche des Gehäuses des Objektivs eine Verspiegelung, so kann nach innen gestrahltes Licht auf den Ringspiegel gelenkt werden, d.h. es kann ein noch größerer Anteil der abgestrahlten Lichtleistung für die Beleuchtung des Objekts genutzt werden.

Gemäß einer weiteren besonders bevorzugten Ausgestaltung der Erfindung ist die Beleuchtungseinrichtung zur Beleuchtung des aufzunehmenden Objekts im Dunkelfeld ausgelegt. Die Dunkelfeldbeleuchtung hat gegenüber der Hellfeldbeleuchtung insbesondere den Vorteil einer weitaus größeren Störsicherheit bei möglichen Flächenverkippungen der Objekte.

Gemäß einer weiteren vorteilhaften Ausgestaltung der Erfindung umschließt die Beleuchtungseinrichtung das Objektiv, wodurch insbesondere der Raumbedarf verringert wird. Aus dem gleichen Grunde ist es auch vorteilhaft die Ablenkeinrichtung zumindest annähernd in Höhe des Objektivs anzuordnen. Hierdurch wird dann auch eine integrierte Bauform von Objektiv, Beleuchtungseinrichtung und Ablenkeinrichtung ermöglicht, die eine extrem gedrängte Bauweise bei erheblich verbesserter Handhabung der gesamten optischen Aufnahmeeinrichtung gewährleistet.

Ausführungsbeispiele der Erfindung sind in der Zeichnung dargestellt und werden im folgenden näher beschrieben.

Es zeigen

Fig. 1 eine optische Aufnahmeeinrichtung für Bildverarbeitungssysteme in stark vereinfachter schematischer Darstellung,

Fig. 2 die Anordnung von Dioden und Helligkeitssensoren bei der Aufnahmeeinrichtung gemäß Fig. 1,

Fig. 3 ein erstes Ausführungsbeispiel eines Objektivs mit integrierter Beleuchtungseinrichtung,

Fig. 4 ein zweites Ausführungsbeispiel eines Objektivs mit integrierter Beleuchtungseinrichtung,

Fig. 5 das Blockschaltbild des Regelkreises einer ersten Ausführungsform für eine Beleuchtungsregelung und

Fig. 6 das Blockschaltbild des Regelkreises einer zweiten Ausführungsform für eine Beleuchtungsregelung.

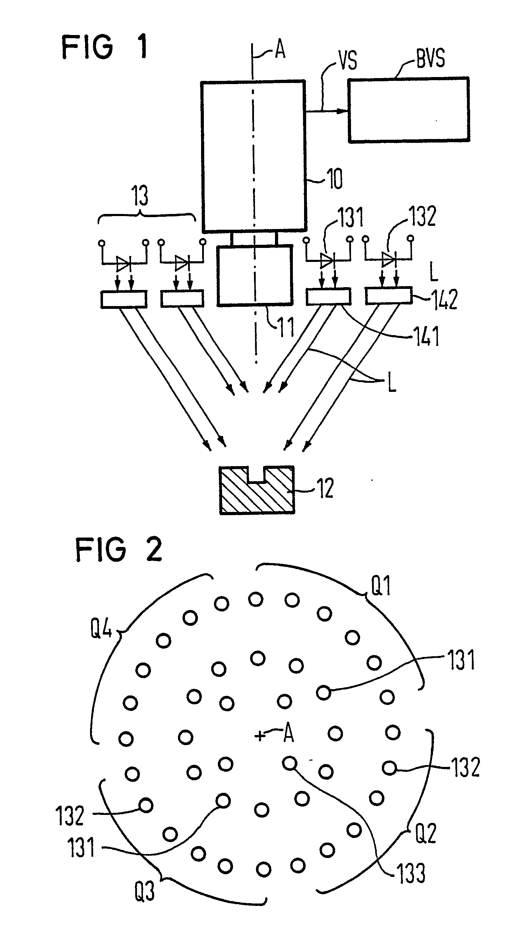

Fig. 1 zeigt in stark vereinfachter schematischer Darstellung eine optische Aufnahmeeinrichtung für Bildverarbeitungssysteme. Es ist ein als CCD-Kamera ausgebildeter Bild-Signal-Wandler 10 mit vorgeschaltetem Objektiv 11 zu erkennen, wobei die gemeinsame optische Achse des Bild-Signal-Wandlers 10 und des Objektivs 11 mit A bezeichnet ist. Das Objektiv 11 bildet ein Objekt 12 auf den CCD-Sensor des Bild-Signal-Wandlers 10 ab, der dieses optische Bild dann in eine zeitliche Aufeinanderfolge elektrischer Signale bzw. in ein Videosignal VS umformt. Das Videosignal VS wird zur weiteren Auswertung entsprechend der jeweiligen Aufgabenstellung einem mit BVS bezeichneten Bildverarbeitungssystem zugeführt.

Zur Beleuchtung der Oberfläche des Objektes 12 im Auflicht dient eine Beleuchtungseinrichtung 13, die mehrere im infraroten Wellenlängenbereich emittierende Dioden 131 und 132 umfasst. Wie insbesondere aus Fig. 2 zu erkennen ist, sind insgesamt zwölf Dioden 131 in gleichmäßiger Teilung auf einem inneren zur optischen Achse A koaxialen Kreis angeordnet, während insgesamt vierundzwanzig Dioden 132 in gleichmäßiger Teilung auf einem äußeren zur optischen Achse A koaxialen Kreis angeordnet sind. Sowohl der innere als auch der äußere koaxiale Kreis befinden sich dabei in Höhe des Objektivs 11, d.h. die Beleuchtungseinrichtung 13 umschließt das Objektiv 11. Das von den Dioden 131 emittierte Licht L wird über eine koaxial zur optischen Achse A angeordnete, ringförmige innere Ablenkeinrich tung 141 allseitig schräg auf das Objekt 12 konzentriert. In entsprechender Weise wird das von den Dioden 132 emittierte Licht L über eine ebenfalls koaxial zur optischen Achse A angeordnete ringförmige, äußere Ablenkeinrichtung 142 allseitig schräg auf das Objekt 12 konzentriert. Sowohl die innere Ablenkeinrichtung 141 als auch die äußere Ablenkeinrichtung 142 befinden sich dabei in Höhe des Objektivs 11, d.h. sie umschließen das Objektiv 11 unterhalb der Beleuchtungseinrichtung 13.

Die Ablenkeinrichtungen 141 und 142 sind zur Beleuchtung der Oberfläche des Objekts 12 im Dunkelfeld ausgelegt, wobei auch unterschiedliche Strahleinfallswinkel möglich sind. In jedem Fall wird der Strahleinfallswinkel flexibel an die Besonderheiten der Objektoberfläche und an die jeweils zu lösende Aufgabe angepaßt, wobei insbesondere eine homogene Ausleuchtung der Objektoberfläche gewährleistet sein soll.

Bei den im infraroten Wellenlängenbereich emittierenden Dioden 131 und 132 ist die Abstrahlintensität abhängig vom Stromdurchfluß, d.h. die Intensität kann in einfacher Weise über den Strom geregelt werden. Diese Regelung kann dabei für den inneren und den äußeren Kreis und/oder quadrantenweise getrennt vorgenommen werden. In Fig. 2 ist angedeutet, daß die Dioden 131 und 132 zu separat regelbaren Quadranten Q1 bis Q4 zusammengefaßt sind, wobei jedem dieser Quadranten ein Helligkeitssensor 133 zugeordnet ist. Diese Helligkeitssensoren 133 erfassen das von den Dioden 131 und 132 ausgestrahlte und an der Oberfläche des Objekts 12 reflektierte Licht L ebenfalls annähernd quadrantenweise, so daß es mit einem an späterer Stelle noch zu beschreibenden Regelkreis für die Regelung der Abstrahlintensität der Dioden 131 und 132 im zugeordneten Quadranten herangezogen werden kann.

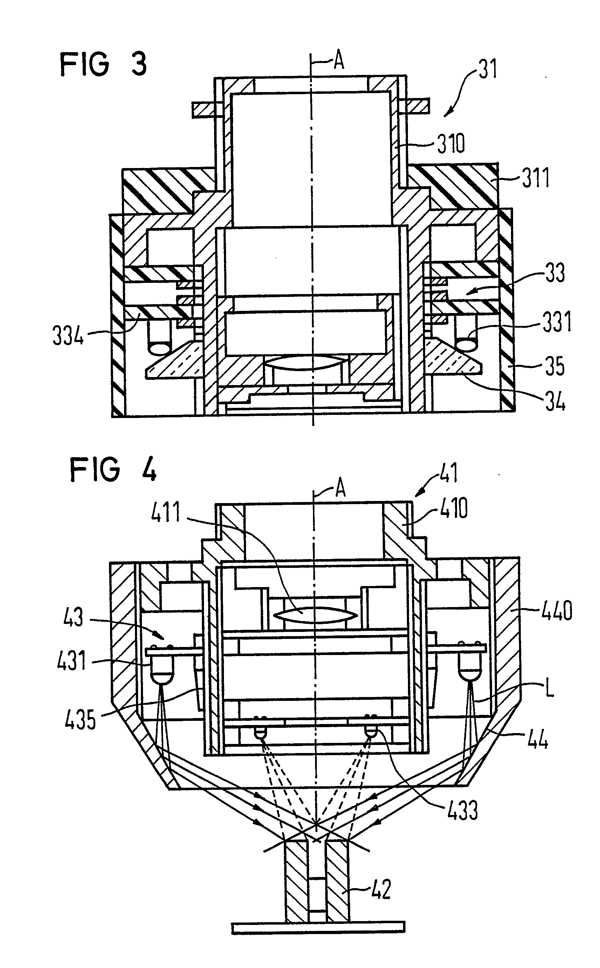

Fig. 3 zeigt im Längsschnitt ein erstes Ausführungsbeispiel eines Objektivs mit integrierter Beleuchtungseinrichtung. Von dem Objektiv 31, dessen optische Achse wieder mit A bezeichnet ist, sind in der stark vereinfachten Darstellung das Objektivgehäuse 310 ein Klemmdeckel 311, ein Achromat 312 und eine Blende 313 zu erkennen. Den unteren Teil des Objektivsgehäuses 310 umschließt ein fest angeordneter, ringförmiger, koaxial zur zur optischen Achse A ausgerichteter Diodenträger 334, auf welchem in gleichmäßiger Teilung über den Umfang beispielsweise sechzehn im infraroten Wellenlängenbereich emittierende Dioden 331 angeordnet sind. Die Dioden 331 und der Diodenträger 334 bilden dabei eine Beleuchtungseinrichtung 33. Unmittelbar unterhalb dieser Beleuchtungseinrichtung 33 ist eine als Ringlinse ausgebildete Ablenkeinrichtung 34 auf das Objektivgehäuse 310 aufgesetzt, d.h. sie ist ebenfalls koaxial zur optischen Achse A ausgerichtet. Durch diese Ablenkeinrichtung 34 wird das von den Dioden 331 emittierte Licht allseitig schräg auf ein in Fig. 3 nicht näher dargestelltes Objekt konzentriert. Der Ablenkwinkel der Ablenkeinrichtung 34 bzw. der davon abhängige Strahleinfallswinkel werden so auf das Objekt abgestimmt, daß sich eine optimale Lichtverteilung in der Aufnahmeebene ergibt. Zum Schutz der Beleuchtungseinrichtung 33 und der Ablenkeinrichtung 34 dient eine Schutzkappe 35, die auf einen ringförmigen Ansatz des Objektivgehäuses 310 und auf den Diodenträger 334 aufgesetzt ist.

Fig. 4 zeigt im Längsschnitt ein zweites Ausführungsbeispiel eines Objektivs mit integrierter Beleuchtungseinrichtung. Von dem Objektiv 41 dessen optische Achse auch hier wieder mit A bezeichnet ist, sind in der stark vereinfachten Darstellung das Objektivgehäuse 410 und eine Linse 411 zu erkennen. Den unteren Teil des Objektivgehäuses 410 umschließt ein fest darauf angeordneter, ringförmiger, koaxial zur optischen Achse A ausgerichteter Diodenträger 434, auf welchem in gleichmäßiger Teilung über den Umfang beispielsweise 12 im infraroten Wellenlängenbereich emittierende Dioden 431 angeordnet sind. Die Dioden 431 und der Diodenträger 434 bilden dabei eine Beleuchtungseinrichtung 43. Unterhalb dieser Beleuchtungseinrichtung 43 ist eine als Ringspiegel ausgebildete Ablenkeinrichtung 44 angeordnet, die ebenfalls koaxial zur optischen Achse A ausgerichtet ist. Durch diese Ablenkeinrichtung 44 wird das von den Dioden 431 emittierte Licht L allseitig schräg auf die Oberfläche eines unterhalb des Objektivs 41 angeordneten Objektes 42 konzentriert. Der Ablenkwinkel der Ablenkeinrichtung 44 bzw. der davon abhängige Strahleinfallswinkel ist so auf das Objekt 42 abgestimmt, daß sich eine optimale Lichtverteilung in der Aufnahmeebene ergibt. Bei dem dargestellten Objekt 42 handelt es sich um eine Spule, deren Kernloch mit dem BVS (vgl. Fig. 1) erkannt werden soll. Für diese Aufgabe hat sich ein Einstrahlwinkelbereich des Lichtes L zwischen 50 und 60° als vorteilhaft erwiesen.

Die vorstehend erwähnte Ablenkeinrichtung 44 ist Bestandteil einer äußeren Schutzkappe 440, die auf einen ringförmigen Ansatz des Objektivgehäuses 410 aufgesetzt ist und in ihrem unteren konischen Bereich zur Bildung der Ringlinse eine Innenverspiegelung besitzt. Im Bereich dieser Innenverspiegelung trägt auch die gegenüberliegende Außenfläche des Objektivgehäuses 410 zur Erzielung einer noch besseren Lichtausbeute eine Verspiegelung 435.

Im unteren inneren Bereich des Objektivs 41 sind etwa in Höhe der Ablenkeinrichtung 44 Helligkeitssensoren 433 angeordnet, die das von den Dioden 431 ausgestrahlte und an der Oberfläche des Objekts 42 reflektierte Licht L erfassen und damit eine Regelung der Abstrahlintensität der Dioden 431 ermöglichen.

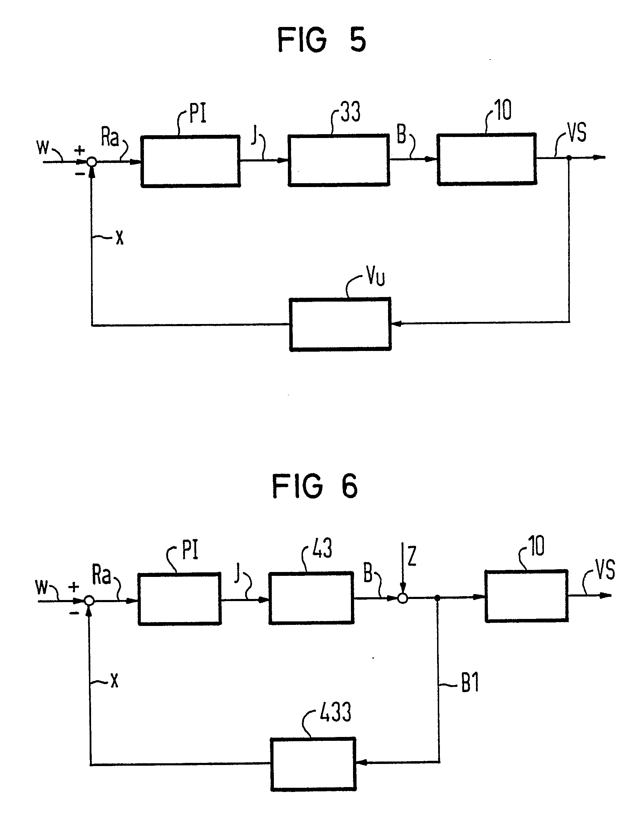

Fig. 5 zeigt das Blockschaltbild des Regelkreises einer für die Ausführungsform gemäß Fig. 3 geeigneten Beleuchtungsregelung. In diesem Regelkreis sind nacheinander ein Proportional-Integralregler PI, die Beleuchtungseinrichtung 33 (vergleiche auch Fig. 3) und der Bild-Signal-Wandler 10 (vergl. auch Fig. 1) angeordnet, wobei der Pfeil B das Bild des jeweiligen Objektes darstellt. Das vom Bild-Signal-Wandler 10 erzeugte Videosignal VS wird einer Videosignalumformung VU zugeführt, deren Ausgangssignal als Regelgröße x am Eingang des Reglers PI zur Bildung der Regelabweichung Ra mit dem Sollwert w der Beleuchtungsintensität verglichen wird. Bei Abweichung ändert sich die Ausgangsgröße y des Reglers PI, so daß die Beleuchtungsintensität der Beleuchtungseinrichtung 33 über den Stromdurchfluß auf den gewünschten Wert eingestellt werden kann. Die Vorgabe des Sollwertes w, d.h. der gewünschten Helligkeit ist dabei objektbezogen.

Fig. 6 zeigt das Blockschaltbild des Regelkreises einer für die Ausführungsform gemäß Fig. 4 geeigneten Beleuchtungsregelung. Bei dieser Variante ist zwischen der hierzu regelnden Beleuchtungseinrichtung 43 und dem Bild-Signal-Wandler 10 der Einfluß einer auf das Bild B wirkenden Störgröße Z angedeutet. Da hier eine quadrantenweise Regelung der Beleuchtungsintensität vorgesehen ist, eignet sich das Videosignal VS nicht für eine Beleuchtungsrückführung. Vielmehr wird hier das durch den Einfluß der Störgröße Z variierte Signal B als Signal B1 dem Helligkeitssensor 433 (vergleiche Fig. 4) zugeführt, dessen Ausgangsgröße dann die Regelgröße x darstellt. Die Bildung der Regelabweichung Ra durch Vergleich der Regelgröße x mit einem hier für den jeweiligen Quadranten vorgegebenen Sollwert w entspricht wieder der Ausführungsform gemäß Fig. 5. Mit insgesamt vier der in Fig. 6 dargestellten Quadrantenregelungen können dann durch Verkippungen des Objektes 42 (vergleiche Fig. 4) entstandene, unterschiedliche Flächenausleuchtungen korrigiert werden.

Bei den in den vorstehend beschriebenen Ausführungsbeispielen genannten Dioden 131, 132, 331 und 431 handelt es sich um Lamineszenzdioden auf Galliumarsenid (GaAs)-Basis oder auf Galliumaluminiumarsenid (GaAlAs)-Basis, die im nahen infraroten Bereich des Spektrums (IRED) emittieren. Halbleiterkameras wie CCD-Kameras, insbesondere Si-Halbleiterkameras sind im Hinblick auf ihre Empfindlichkeit besonders gut an das Emissionsspektrum dieser IRED-Dioden angepaßt. Bei GaAs-IREDs liegt die Emission bei ca. 900 nm. Bei den GaAlAs-IREDs wie z.B. Typ SFH 480-2 der Siemens AG, DE liegt die Wellenlänge der emittierten Strahlung etwa bei 880 bis 886 nm.

## Ansprüche

1. Optische Aufnahmeeinrichtung für Bildverarbeitungssysteme (BVS) mit
- einem Objektiv (11;31;41) zur Erzeugung eines optischen Bildes eines aufzunehmenden Objektes (12;42),
- einem Bild-Signal-Wandler (10), welcher das vom Objektiv (11;31;41) erzeugte optische Bild in eine zeitliche Aufeinanderfolge elektrischer Signale (VS) umformt, und mit
- einer Beleuchtungseinrichtung (13;33;43) zur Beleuchtung des aufzunehmenden Objektes (12;42) im Auflicht,
**gekennzeichnet durch**
- einen als Halbleiterkamera ausgebildeten Bild-Signal-Wandler (10),
- eine Beleuchtungseinrichtung (13;33;43) mit mehreren im nahen Infrarotbereich emittierenden Dioden (131,132; 331;431) die in gleichmäßiger Teilung auf mindestens einem zur optischen Achse (A) des Objektives (11;31;41) koaxialen Kreis angeordnet sind und durch
- eine koaxial zur optischen Achse (A) des Objektivs (11;31;41) angeordnete ringförmige Ablenkeinrichtung (141,142;34;44), die das von den Dioden (131,132;331;431) emittierte Licht (L) allseitig schräg auf das aufzunehmende Objekt (12;42) konzentriert.

2. Optische Aufnahmeeinrichtung nach Anspruch 1,
**dadurch gekennzeichnet,**
daß die Abstrahlintensität der Dioden (131,132;331;431) über den Stromdurchfluß regelbar ist.

3. Optische Aufnahmeeinrichtung nach Anspruch 2,
**dadurch gekennzeichnet,**
daß die vom Bild-Signal-Wandler (10) erzeugten elektrischen Signale (VS) als Regelgröße für die Regelung der Abstrahlintensität der Dioden (131,132;331) herangezogen sind.

4. Optische Aufnahmeeinrichtung nach Anspruch 2,
**dadurch gekennzeichnet,**
daß die Abstrahlintensität der Dioden (131,132;431) getrennt für mehrere Gruppen von Dioden (131,132;431) regelbar ist.

5. Optische Aufnahmeeinrichtung nach Anspruch 4,
**dadurch gekennzeichnet,**
daß die Dioden (131,132;431) quadrantenweise zu getrennt regelbaren Gruppen zusammengefaßt sind.

6. Optische Aufnahmeeinrichtung nach Anspruch 4 oder 5,
**dadurch gekennzeichnet,**
daß das von einer Gruppe von Dioden (131,132;431) ausgestrahlte und an der Oberfläche des aufzunehmenden Objektes (12;42) reflektierte Licht (L) mit zugeordneten Helligkeitssensoren (133; 433) erfaßt und als Regelgröße für die Regelung der Abstrahlintensität der jeweiligen Gruppe von Dioden (131,132;431) herangezogen ist.

7. Optische Aufnahmeeinrichtung nach einem der vorhergehenden Ansprüche,
**dadurch gekennzeichnet,**
daß die Dioden (331;431) auf einem als Ringscheibe ausgebildeten Diodenträger (334;434) befestigt sind.

8. Optische Aufnahmeeinrichtung nach einem der vorhergehenden Ansprüche,
**dadurch gekennzeichnet,**
daß die Ablenkeinrichtung (34) durch eine Ringlinse gebildet ist.

9. Optische Aufnahmeeinrichtung nach einem der Ansprüche 1 bis 7,
**dadurch gekennzeichnet,**
daß die Ablenkeinrichtung (44) durch einen Ringspiegel gebildet ist.

10. Optische Aufnahmeeinrichtung nach Anspruch 9,
**dadurch gekennzeichnet,**
daß der Ringspiegel durch einen konischen Gehäuseabschnitt eines äußeren Gehäuses gebildet ist.

11. Optische Aufnahmeeinrichtung nach Anspruch 10,
**dadurch gekennzeichnet,**
daß die Außenfläche des Gehäuses des Objektivs (41) eine Verspiegelung (435) trägt.

12. Optische Aufnahmeeinrichtung nach einem der vorhergehenden Ansprüche,
**gekennzeichnet durch**
eine Beleuchtungseinrichtung (13;33;43) zur Beleuchtung des aufzunehmenden Objektes (12; 42) im Dunkelfeld.

13. Optische Aufnahmeeinrichtung nach einem der vorhergehenden Ansprüche,
**dadurch gekennzeichnet,**
daß die Beleuchtungseinrichtung (13;33;43) das Objektiv (11;31;41) umschließt.

14. Optische Aufnahmeeinrichtung nach einem der vorhergehenden Ansprüche,
**dadurch gekennzeichnet,**
daß die Ablenkeinrichtung (141,142;34;44) zumindest annähernd in Höhe des Objektivs (11;31;41) angeordnet ist.

15. Optische Aufnahmeeinrichtung nach den Ansprüchen 13 und 14,
**gekennzeichnet durch,**
eine integrierte Bauform von Objektiv (31;41), Beleuchtungseinrichtung (33;43) und Ablenkeinrichtung (34;44).

## FIG 1

## FIG 2

FIG 3

FIG 4

# FIG 5

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 042 164  (UNITED GLASS LTD) <br> * Seite 1, Zeilen 61-64; Ansprüche 1-3 * <br> --- | 1 | G 01 N  21/90 <br> G 01 B  11/24 |
| Y | GB-A-2 159 617  (HAJIME INDUSTRIES LTD) <br> * Seite 3, Zeilen 74-126; Ansprüche 1,2 * <br> --- | 1 | |
| A | DE-A-2 916 361  (SIEMENS AG) <br> * Ansprüche 7-12 * <br> --- | 1,2 | |
| A | EP-A-0 047 936  (SIEMENS AG) <br> --- | | |
| A | EP-A-0 209 077  (KIRIN BEER K.K.) <br> --- | | |
| A,D | ELEKTRONIK, Band 4, 19. Februar 1988, Seiten 121-122,124-126; H. KÖBBING et al.: "Hochgenaue Lagebestimmung bewegter Objekte in Produktions- und Lagerbereichen" <br> ----- | | |

**RECHERCHIERTE SACHGEBIETE (Int. Cl.5)**

G 01 N
G 01 B

Der vorliegende Recherchenbericht wurde für alle Patentansprüche erstellt

| Recherchenort | Abschlußdatum der Recherche | Prüfer |
|---|---|---|
| DEN HAAG | 20-11-1989 | VAN DEN BULCKE E. |